# DEMANDE DE BREVET EUROPEEN

(11) **EP 3 823 120 A1**
(43) Date de publication de la demande: **19.05.2021**
(21) Numéro de dépôt: 20202386.7
(22) Date de dépôt: 16.10.2020
(51) Int. Cl.: H02G 15/10, H01R 4/34, H01R 11/12, H01R 31/02, H01R 4/36, H01R 24/20

(54) **KIT DE RACCORDEMENT ÉLECTRIQUE AMÉLIORÉ**

(30) Priorité: 12.11.2019 FR 1912640
(71) Demandeur: Leoni Wiring Systems France, 78180 Montigny le Bretonneux (FR)
(72) Inventeur: ROULAND, Hervé, 78955 CARRIERES SOUS POISSY (FR)
(74) Mandataire: LLR

(57) **Abrégé**

L'invention concerne un kit de raccordement (18) électrique d'un premier conducteur (11) électrique à un deuxième conducteur (12) électrique. Il comprend :
- un boîtier de connexion (20) comprenant un corps central (22) dans lequel est ménagée une cavité de raccordement (24) accessible par une ouverture, un premier manchon (26) de réception du premier conducteur (11) communiquant avec la cavité de raccordement (24), et un deuxième manchon (28) de réception du deuxième conducteur (12) communiquant avec la cavité de raccordement (24) et le premier manchon de réception (26), et
- un élément de raccordement (32) destiné à être introduit dans la cavité de raccordement par l'ouverture apte à relier le premier conducteur (11) au deuxième conducteur (12).

## Description

L'invention concerne un kit de raccordement électrique, notamment pour véhicule automobile.

On connaît déjà dans l'état la technique des boîtiers de raccordement électrique, permettant d'effectuer une dérivation électrique isolante par vissage entre au moins deux conducteurs électriques comportant chacun une âme conductrice revêtue d'une gaine et une extrémité de raccordement en forme d'anneau.

On entend par dérivation ou raccordement par vissage un raccordement dans lequel la connexion électrique entre les conducteurs s'effectue au moyen d'une vis, qui relie les conducteurs entre eux. Pour ce faire, la vis est généralement enfilée dans des anneaux situés à des extrémités respectives des conducteurs électriques.

Les kits de raccordement par vissage comprennent en général un boîtier de connexion ainsi qu'un ensemble de vis et d'écrou. Le boîtier comprend une première partie et une deuxième partie rabattables l'une sur l'autre. Les parties sont chacune munies de gorges de réception s'étendant selon une direction longitudinale et destinée à accueillir chacune un conducteur électrique. La première partie comprend en outre une zone de raccordement destinée à accueillir la vis et les extrémités de raccordement des différents conducteurs.

Pour effectuer le raccordement entre les conducteurs électriques, on place tout d'abord la vis, tête en bas, c'est-à-dire de sorte que la tête soit en contact avec la première partie du boîtier, dans la zone de connexion. Ensuite, on place successivement les extrémités de raccordement des conducteurs dans les gorges de réception de la première partie du boîtier, en enfilant l'anneau formant l'extrémité de raccordement sur la vis. Pour cela, on superpose généralement les anneaux les uns sur les autres en déformant partiellement les conducteurs. Ceci fait, un écrou est également enfilé sur la vis, en contact avec l'anneau se trouvant par-dessus les autres, que l'on fixe par vissage sur la vis afin de maintenir les conducteurs en place. Enfin, on met la deuxième partie formant couvercle sur les conducteurs.

Un inconvénient de ce genre de boîtier est qu'il occupe un volume important du fait que pour enfiler les anneaux des extrémités de raccordement des conducteurs sur la vis, il est nécessaire d'avoir une longueur de fil importante dans la cavité. De plus, pour ce faire, il faut déformer partiellement les conducteurs à l'assemblage, ce qui peut les abîmer.

L'invention a donc pour but de fournir un kit de raccordement électrique permettant d'effectuer un raccordement électrique entre au moins deux conducteurs électriques qui soit plus compact et limite l'endommagement des conducteurs électriques lors de leur raccordement.

A cet effet, l'invention a pour objet un kit de raccordement d'un premier conducteur électrique à au moins un deuxième conducteur électrique, **caractérisé en ce qu'il** comprend :
- un boîtier de connexion comprenant un corps central dans lequel est ménagée une cavité de raccordement accessible par une ouverture, un premier manchon de réception du premier conducteur, communiquant avec la cavité de raccordement, et au moins un deuxième manchon de réception du deuxième conducteur, communiquant avec la cavité de raccordement et le premier manchon de réception, et
- un élément de raccordement destiné à être introduit dans la cavité de raccordement par l'ouverture apte à relier le premier conducteur au deuxième conducteur.

Grâce au fait que le boîtier comprenne un corps muni d'une cavité de raccordement et que les manchons débouchent sur cette cavité de raccordement, il n'est pas nécessaire de prévoir un boîtier en deux parties rabattables l'une sur l'autre, ce qui réduit son encombrement.

En outre, le fait que l'on puisse insérer un élément de raccordement visant à relier les connecteurs dans la cavité permet de relier les connecteurs entre eux après insertion de ces dernières dans le boîtier. Ainsi, il n'est pas nécessaire de déformer les conducteurs lors l'insertion de leurs extrémités de raccordement dans la cavité pour les enfiler sur l'élément de raccordement. On évite ainsi la déformation des conducteurs.

Avantageusement, afin de maintenir en place les conducteurs une fois ceux-ci introduits dans le boîtier, le kit de raccordement comprend en outre un élément de fixation de l'élément de raccordement destiné à être introduit dans la cavité de raccordement par l'ouverture et étant muni d'une orifice de connexion permettant d'accueillir l'élément de raccordement une fois celui-ci introduit dans la cavité de raccordement.

De manière à réaliser une connexion au sein d'une zone facile à rendre étanche, l'ouverture étant délimitée par une jupe, le premier manchon de réception, le deuxième manchon de réception et la jupe comprennent chacun une portion dont la section transversale possède un contour interne ayant une courbure à variation continue le long du contour.

En effet, une jupe et des manchons présentant une portion de section transversale à contour interne de courbure à variation continue ne présentent pas d'arêtes, ce qui permet de rendre étanche la jonction entre la cavité et l'extérieur du boîtier ainsi que la jonction entre le boîtier et les éléments de connexion. En particulier, cette configuration permet de rendre le kit étanche à l'aspersion.

On rappelle que la courbure d'un contour en un point du contour est définie comme l'inverse du rayon du cercle osculateur au contour en ce point, c'est-à-dire du cercle venant épouser le contour au plus près au voisinage du point. On parle parfois également du rayon de courbure du contour en un point pour désigner le rayon du cercle osculateur en ce point. L'invention propose donc de supprimer les ruptures de rayons de courbure du contour de la section transversale des manchons et de la jupe.

Afin de réduire encore davantage l'encombrement du boîtier de connexion, le premier manchon de réception et le deuxième manchon de réception s'étendent selon un même axe longitudinal ou selon des axes longitudinaux parallèles. Cette configuration permet de limiter l'encombrement du boîtier et de l'ensemble de connexion en général et s'adapte bien à un placement de l'ensemble de connexion dans un environnement où l'on chercher à limiter l'encombrement à une seule dimension.

Selon un mode de réalisation particulier de l'invention, le boîtier de connexion, comprend en outre un troisième manchon de réception communiquant avec la cavité de raccordement, le premier manchon, et le deuxième manchon de réception.

Afin de réduire l'encombrement d'un tel boîtier de connexion, le troisième manchon de réception s'étendant selon un axe longitudinal, l'axe longitudinal du troisième manchon de réception est parallèle à l'axe longitudinal du premier manchon de réception. Cette configuration permet de limiter l'encombrement du boîtier et de l'ensemble de connexion en général et s'adapte bien à un placement de l'ensemble de connexion dans un environnement où l'on chercher à limiter l'encombrement à une seule dimension.

De préférence, l'élément de raccordement est une vis ou un rivet.

Selon un mode de réalisation particulier de l'invention, le kit comprend au moins deux vis de raccordement et au moins une plaque de connexion munie de deux orifices de connexion, chaque orifice étant destiné à accueillir une des vis de raccordement, la plaque de connexion étant destiné à être disposée dans la cavité de raccordement.

Afin de faciliter la mise en oeuvre de l'étanchéité du boîtier, il comprend en outre un couvercle de protection configuré pour recouvrir la cavité de raccordement.

De manière à rendre étanche à l'immersion de façon simple et fiable l'ensemble de connexion, le kit comprend en outre :
- pour chaque manchon de réception, un joint annulaire, dit joint de manchon, chaque joint de manchon épousant les contours de son manchon de réception et étant destiné à être inséré dans son manchon de réception,

Pour améliorer encore davantage l'étanchéité de l'ensemble de connexion, le kit de connexion comprend en outre des bagues de protection enfilées sur les manchons de réception de sorte à comprimer les joints de manchon.

Pour améliorer encore davantage l'étanchéité de l'ensemble de connexion, il comprend en outre un joint d'étanchéité de corps, dit joint de corps, le joint de corps étant un joint annulaire épousant les contours du corps central et étant destiné à être inséré autour du corps central.

De préférence, le joint de corps est disposé entre le couvercle et une surface extérieure du corps central.

Selon un mode de réalisation particulier de l'invention, le kit de raccordement électrique comprend en outre une entretoise d'espacement des conducteurs destinée à être disposée dans la cavité de raccordement, l'entretoise d'espacement étant percée d'un orifice traversant et étant réalisée en matériau conducteur.

L'invention concerne également un ensemble de raccordement électrique comprenant un premier conducteur électrique muni d'une extrémité de raccordement en forme générale d'anneau, et au moins un deuxième conducteur électrique muni d'une extrémité de raccordement en forme générale d'anneau,
**caractérisé en ce que** l'ensemble comprend en outre un kit de raccordement électrique selon l'invention, l'extrémité de raccordement du premier conducteur étant insérée dans le premier manchon de réception et l'extrémité de raccordement du deuxième conducteur étant insérée dans le deuxième manchon de réception, les extrémités de raccordement étant traversées par l'élément de raccordement inséré dans la cavité de connexion.

L'invention concerne également un procédé de raccordement électrique d'un premier conducteur électrique à un second conducteur électrique, les deux conducteurs comprenant une extrémité de raccordement en forme générale d'anneau,
**caractérisé en ce qu'il** se fait à l'aide d'un kit de raccordement selon l'invention **en ce** qu'il comprend les étapes suivantes :
- insertion de l'extrémité de raccordement du premier conducteur dans le premier manchon de réception de sorte qu'elle atteigne la cavité de raccordement ;
- insertion de l'extrémité de raccordement du deuxième conducteur dans le deuxième manchon de réception de sorte qu'elle atteigne la cavité de raccordement ; et
- mise en place de l'élément de raccordement dans la cavité de raccordement de sorte que l'élément de raccordement passe au travers des anneaux des extrémités de raccordement du premier et du deuxième conducteur.

De manière à rendre étanche à l'immersion de façon simple et fiable l'ensemble de connexion le procédé de raccordement comprend en outre les étapes suivantes :
- mise en place du premier joint de manchon, autour du premier conducteur, dans le premier manchon de réception,
- mise en place du deuxième joint de manchon, autour du deuxième conducteur, dans le deuxième manchon de réception.

Afin d'améliorer encore davantage l'étanchéité de l'ensemble de connexion, le procédé de raccordement comprend en outre une étape d'enfilement des bagues de protection sur les manchons de réception de sorte à comprimer les joints de manchon.

Afin d'améliorer encore davantage l'étanchéité de l'ensemble de connexion, le procédé de raccordement comprend en outre une étape de mise en place du joint de corps autour du corps central.

Afin d'améliorer encore davantage l'étanchéité de l'ensemble de connexion, le procédé de raccordement comprend en outre une étape de mise en place du couvercle de protection par-dessus la cavité de raccordement, le joint d'étanchéité de corps étant disposé entre le couvercle et une surface extérieure du corps central.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un ensemble de connexion selon un premier mode de réalisation de l'invention ;
[Fig. 2] la figure 2 est une vue en perspective du boîtier de l'ensemble de connexion de la figure 1 ;
[Fig. 3] la figure 3 est une vue de détail de la figure 1, le boîtier de connexion étant en transparence ;
[Fig. 4] la figure 4 est une vue en perspective d'un ensemble de connexion selon un deuxième mode de réalisation de l'invention ;
[Fig. 5] la figure 5 est une vue en perspective du boîtier de l'ensemble de connexion de la figure 4 ;
[Fig. 6] la figure 6 est une vue de détail de la figure 4, le boîtier de connexion étant en transparence.

### Description détaillée

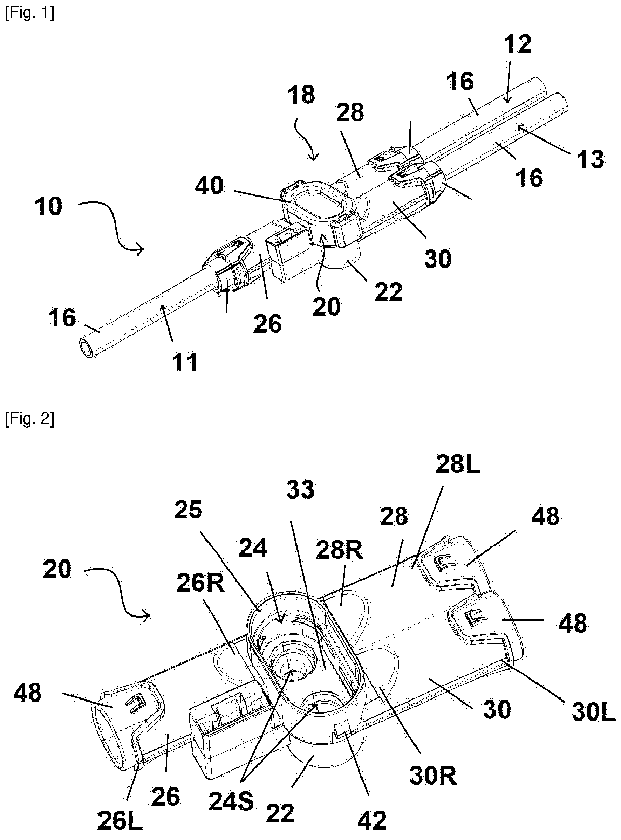

On a représenté à la figure 1 un ensemble de raccordement 10 électrique d'un premier conducteur 11 électrique, d'un deuxième conducteur 12 électrique et d'un troisième conducteur électrique 13. La figure 1 illustre l'ensemble de raccordement 10 électrique une fois le raccordement électrique réalisé entre le premier conducteur 11, le deuxième conducteur 12 et le troisième conducteur 13. Les conducteurs électriques 11, 12, 13 sont par exemple des conducteurs électriques de véhicule automobile.

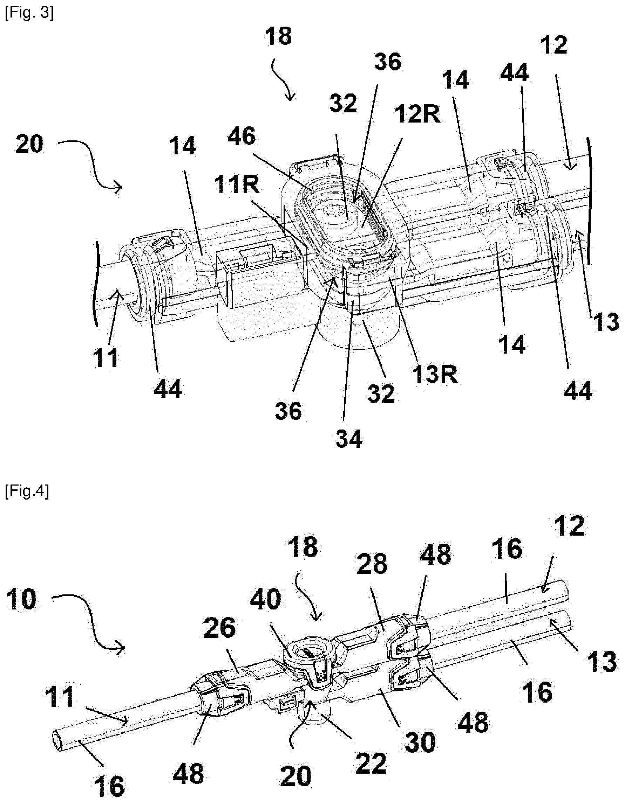

Les conducteurs électriques 11, 12, 13 comprennent une âme conductrice 14 (visible à la figure 3) revêtue d'une gaine isolante 16. Dans l'exemple représenté sur les figures, les conducteurs 11, 12, 13 sont identiques. De façon connue en soi, leur âme 14 est par exemple en fils torsadés et comprend essentiellement un matériau métallique conducteur et leurs gaines 14, 16 sont réalisées essentiellement en polymère. De manière classique, les conducteurs 11, 12, 13 ont une forme cylindrique de révolution.

Les conducteurs 11, 12, 13 sont chacun muni d'une extrémité de raccordement 11R, 12R, 13R sertie sur une partie dénudée de l'âme du conducteur. Chaque extrémité de raccordement 11R, 12R, 13R comprend une surface sensiblement plane, en forme générale d'anneau (visible à la figure 3).

L'ensemble de raccordement 10 comprend un kit de raccordement 18 électrique du premier conducteur 11 électrique au second conducteur 12 électrique qui comprend notamment un boîtier 20 de connexion, seul élément visible du kit de raccordement 18 sur la figure 2. Comme on le verra plus loin, afin de réaliser leur raccordement électrique, le premier conducteur 11 électrique, le deuxième conducteur 12 électrique et le troisième conducteur électrique sont destinés à être logés dans le boîtier 20 de connexion.

On va maintenant décrire plus en détail le boîtier 20 de connexion seul, dans une configuration avant raccordement, en référence à la figure 2.

Le boîtier de connexion 20 comprend un corps central 22 de forme sensiblement cylindrique de révolution dans lequel est ménagée une cavité de raccordement 24 accessible par une ouverture délimitée par une jupe 25. La jupe 25 comprend une portion dont la section transversale possède un contour ayant une courbure à variation continue le long du contour. Dans ce premier mode de réalisation, la jupe 25 présente une section transversale de forme oblongue. La cavité de raccordement présente également une section transversale de forme oblongue, et épouse le contour de la jupe 25.

Le boîtier de connexion 20 comprend en outre un premier manchon de réception 26 du premier conducteur 11 communiquant avec la cavité de raccordement 24. Le premier manchon de réception 26 comprend une portion dont la section transversale possède un contour ayant une courbure à variation continue le long du contour. Dans les modes de réalisation illustrés sur les figures, le premier manchon de réception 26 comporte une portion de forme sensiblement cylindrique de révolution

Le boîtier de connexion 20 comprend en outre un deuxième manchon de réception 28 du deuxième conducteur 12 communiquant avec la cavité de raccordement 24 et le premier manchon de réception 26. Tout comme le premier manchon de réception 26, le deuxième manchon de réception 28 comprend une portion dont la section transversale possède un contour ayant une courbure à variation continue le long du contour. Dans les modes de réalisation illustrés sur les figures, le deuxième manchon de réception 28 comporte une portion de forme sensiblement cylindrique de révolution.

Plus précisément, le premier manchon de réception 26 s'étend selon un axe de longitudinal et comprend une extrémité libre 26L et une extrémité de raccordement 26R, cette extrémité de raccordement débouchant dans la cavité de raccordement 24. Il en est de même pour le deuxième manchon de réception 28 qui comprend une extrémité libre 28L et une extrémité de raccordement 28R débouchant dans la cavité de raccordement 24.

Dans le mode de réalisation illustré sur les figures 1 à 3, le premier manchon de réception 26 et le deuxième manchon de réception 28 s'étendent selon un même axe longitudinal. Cette configuration permet de limiter l'encombrement du boîtier de connexion 20 et de l'ensemble de connexion 10 en général et s'adapte bien à un placement de l'ensemble de connexion 10 dans un environnement où l'on chercher à limiter l'encombrement à une seule dimension.

Le premier manchon de réception 26 et le deuxième manchon de réception sont ici disposés de part et d'autre du corps central 20, dont l'axe longitudinal est perpendiculaire à l'axe longitudinal des premier et deuxième manchons de réception 26, 28. Cette configuration permet de faciliter la mise en place d'une vis du kit de raccordement 18 qui sera décrite plus loin.

Par ailleurs, dans le mode de réalisation illustré aux figures 1 à 3, le boîtier de connexion 20 comprend en outre un troisième manchon de réception 30 communiquant avec la cavité de raccordement 24. De la même façon que les premier et deuxième manchons, le troisième manchon de réception 30 comprend une portion dont la section transversale possède un contour ayant une courbure à variation continue le long du contour. Dans les modes de réalisation illustrés sur les figures, le deuxième manchon de réception 28 comporte une portion de forme sensiblement cylindrique de révolution. Le troisième manchon de réception 30 comprend une extrémité libre 30L et une extrémité de raccordement 30R, cette extrémité de raccordement débouchant dans la cavité de raccordement 24.

Plus précisément, l'axe longitudinal du troisième manchon de réception 30 est parallèle à l'axe longitudinal du premier manchon de réception 24. Dans l'exemple illustré aux figures 1 à 3, le troisième manchon de réception 30 est disposé côte-à-côte du deuxième manchon de réception 28, le long du grand axe de la section oblongue du corps central 22. On pourrait également envisager que le troisième manchon de réception 30 se trouve en-dessous du deuxième manchon de réception 30.

De préférence, le boîtier 20 de connexion est réalisé en matériau plastique, afin de lui conférer des propriétés d'isolation électrique. Il est également avantageusement réalisé d'un seul tenant, par exemple par moulage par injection.

Les manchons de réception 26, 28, 30 sont chacun destinés à accueillir un conducteur électrique 11, 12, 13 respectif. Plus précisément, comme on peut le voir à la figure 3, l'extrémité de raccordement 11R du premier conducteur électrique est insérée dans le premier manchon de réception 26 à travers l'extrémité libre 26L du premier manchon, l'extrémité de raccordement 12R du deuxième conducteur électriques est insérée dans le deuxième manchon de réception 28 à travers l'extrémité libre 28L du deuxième manchon, et l'extrémité de raccordement 13R du troisième conducteur électrique est insérée dans le troisième manchon de réception 30 à travers l'extrémité libre 30L du troisième manchon.

Le kit de raccordement électrique 18 comprend en outre au moins vis de raccordement un élément de raccordement 32 destinée à être disposé dans le corps central 22 du boîtier de connexion, plus précisément dans la cavité de raccordement 24. Dans le mode de réalisation présenté aux figures 1 à 3, le kit de raccordement électrique 18 comprend deux éléments de raccordement 32 qui sont des vis de raccordement. Dans d'autres variantes non représentées, il peut s'agir de rivets.

On notera que dans cet exemple de réalisation, le corps central 22 est muni d'une paroi de séparation 33 délimitant la cavité 24, la paroi de séparation 33 étant percée par deux orifices débouchant dans deux sous-cavités 24S, prolongeant la cavité de raccordement 24. Les deux sous-cavités 24S permettent d'accueillir chacune les parties filetées des vis de raccordement 32.

Comme on peut le voir à la figure 3 notamment, les extrémités de raccordement 11R, 12R, 13R sont traversées par les éléments de raccordement, c'est-à-dire ici enfilées sur la vis de raccordement 32 insérée dans le boîtier de connexion 20. A cet effet, les extrémités de raccordement 11R et 12R des premier et deuxième conducteurs sont disposées dans les manchons 26, 28, 30 de façon superposée. Les ouvertures des anneaux formant les extrémités de raccordement 11R, 12R des premier et deuxième conducteurs sont sensiblement alignées, ici selon un axe parallèle à l'axe longitudinal du corps central 22, de sorte à permettre le passage de la vis 32 à travers ces deux anneaux.

Par ailleurs, le kit de raccordement 18 comprend en outre au moins un élément de fixation étant destiné à être introduit dans la cavité de raccordement 24 par l'ouverture.

Dans le mode de réalisation présenté aux figures 1 et 3, l'élément de fixation est une plaque de connexion 34 électrique des conducteurs 11, 12, 13.

La plaque de connexion 34 est munie de deux orifices 36 permettant d'accueillir les vis de raccordement 32 une fois celles-ci introduites dans la cavité de raccordement 24. Les orifices 36 sont ici filetés pour permettre de fixer les vis de raccordement 32 à la plaque de connexion 34 et ainsi maintenir en place les extrémités de raccordement 11R, 12R et 13R dans la cavité de raccordement 34. En l'occurrence, la plaque de connexion 34 vient ne contact avec la paroi de séparation 33.

La plaque de connexion 34, visible à la figure 3, peut être disposée dans le corps central 22. Elle de forme sensiblement plane de contour oblong, de sorte à épouser les corps du corps central 22. La plaque de connexion 34 permet notamment de former une connexion électrique entre les trois conducteurs 11, 12, 13.

Le kit de raccordement 18 comprend également un couvercle de protection 40 configuré pour recouvrir la cavité de raccordement 24. Dans ce premier mode de réalisation, le couvercle de protection 40 a une section transversale de forme oblongue, afin d'épouser le contour de la jupe 25.

Le couvercle de protection 40 pourra être fixé sur le corps central 22 par divers moyens tels que le vissage ou l'encliquetage. Dans l'exemple illustré sur les figures 1 à 3, une surface externe du corps central 22 est munie d'ergots d'encliquetage 42 (un seul est visible sur la figure 2), par exemple disposés de part et d'autre de la cavité de raccordement 24, qui permettent le maintien en place du couvercle de protection 40 sur le corps central 22 par déformation du couvercle de protection 40 au passage des ergots d'encliquetage 42

Le kit de raccordement 18 inclut en outre, pour chaque manchon de réception 26, 28, 30, un joint annulaire, dit joint de manchon 44. Chaque joint de manchon 44 épouse les contours de son manchon de réception et est destiné à être inséré dans chacun des manchons de réception 26, 28, 30.

Les joints de manchon 44 sont visibles à la figure 3 notamment. Les joints de manchon étant connus en eux-mêmes, ils ne seront pas décrits à nouveau ici. Comme il sera expliqué plus loin, les joints de manchon 44 permettent d'assurer l'étanchéité de la jonction entre chaque conducteur 11, 12, 13 et le manchon de réception 21, 22, 23 respectif dans lequel il est inséré.

Un joint d'étanchéité de corps, dit joint de corps 46, est également destiné à être inséré autour du corps central 22. Le joint de corps 46 est un joint annulaire épousant les contours du corps central 22. De ce fait, dans le mode de réalisation illustré aux figures 1 à 3, le joint de corps 46 a une section transversale oblongue.

Le joint de corps 46 est disposé entre le couvercle de protection 40 et une surface extérieure du corps central, comme on peut le voir à la figure 3. Ainsi le joint de corps permet d'assurer l'étanchéité de la fermeture de la cavité de raccordement 24 par le couvercle de protection 40.

Des bagues de protection 48 sont également enfilées sur les manchons de réception 26, 28, 30 de sorte à comprimer les joints de manchon 44. Une fois les premier, deuxième, troisième conducteurs électriques 11, 12, 13 insérés dans leurs manchons respectifs 26, 28, 30, les joints de manchon 44 et les bagues de protection 48 mises en place, chaque bague de protection 44 est en contact avec le manchon de réception 26, 28, 30, le joint de manchon 40 et le conducteur électrique 11, 12, 13 correspondant.

Plus précisément, la bague de protection 48 enserre l'extrémité libre 26L, 28L, 30L du manchon à une de ses extrémités, et enserre la gaine 16 du conducteur 11, 12, 13 correspondant à son extrémité opposée. Entre ses deux extrémités, la bague de protection 48 enserre le joint de manchon 44. De cette manière, on améliore l'étanchéité de la jonction entre chaque conducteur 11, 12, 13 et le manchon de réception 21, 22, 23 respectif dans lequel il est inséré.

On va maintenant décrire un deuxième mode de réalisation de l'invention en référence aux figures 4 à 6.

Dans ce deuxième mode de réalisation, les éléments de l'ensemble de connexion 10 sont similaires, hormis le boîtier 20. En effet, le corps central 22 du boîtier a une section transversale non plus oblongue, mais circulaire.

De ce fait, le troisième manchon 30, dont l'axe longitudinal est toujours parallèle à celui du premier manchon 26, se trouve en-dessus du deuxième manchon 28. Autrement dit, le deuxième manchon 28 et le troisième manchon 30 sont superposés.

De plus, la forme du couvercle de protection 40 est adaptée à celle du corps central 22. Il est donc de forme cylindrique de révolution, à section transversale circulaire.

Par ailleurs, dans ce deuxième mode de réalisation, le kit de raccordement électrique 18 comprend en outre une entretoise 50 d'espacement des conducteurs destinée à être disposé dans la cavité de raccordement 24. Plus précisément, l'entretoise 50 est disposée, une fois les extrémités de raccordement 11R, 12R, 13R des premier, deuxième et troisième conducteurs introduits dans la cavité de raccordement 24, entre la deuxième extrémité de raccordement 12R et la troisième extrémité de raccordement 13R. L'entretoise 50 est réalisée en matériau conducteur de sorte à participer à la connexion électrique des conducteurs 11, 12, 13.

Ceci permet, compte tenu du fait que le deuxième conducteur 12 et le troisième conducteur 13 sont superposés en raison de la disposition des deuxième 28 et troisième manchon 30, de maintenir la deuxième extrémité de raccordement 12R et la troisième extrémité de raccordement 13R en place dans la cavité de raccordement 24 et ainsi éviter leur déformation.

Afin de permettre le passage de la vis de raccordement 32, l'entretoise 50 est percée d'un orifice traversant (non visible sur les figures).

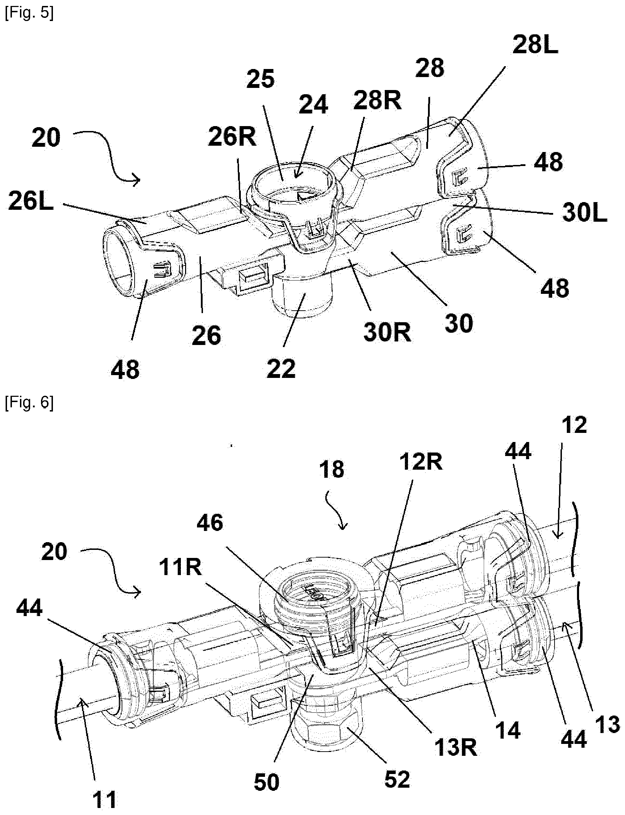

Par ailleurs, comme on peut le voir à la figure 6, en remplacement de la plaque de connexion 32, un écrou 52 est placé au fond de la cavité de raccordement 24 pour accueillir la vis de raccordement 32.

On va maintenant décrire un procédé de raccordement électrique du premier conducteur électrique 11 au second conducteur électrique 12 à l'aide du kit de raccordement 18 selon le premier mode de réalisation de l'invention.

Au cours d'une première étape, on insère la plaque de connexion 34 dans la cavité de raccordement 24. En l'occurrence, la plaque de connexion 34 vient en contact avec la paroi de séparation 33.

On insère l'extrémité de raccordement 11R du premier conducteur dans le premier manchon de réception 26 de sorte qu'elle atteigne la cavité de raccordement 24. De même, on insère l'extrémité de raccordement 12R du deuxième conducteur dans le deuxième manchon de réception 28 de sorte qu'elle atteigne la cavité de raccordement 24. On insère ensuite l'extrémité raccordement du troisième conducteur 13R dans le troisième manchon de réception 30 de sorte que qu'elle atteigne la cavité de raccordement 24.

Au cours de cette étape, on s'assure que les ouvertures des anneaux formant les extrémités de raccordement 11R, 12R des premier et deuxième conducteurs soient sensiblement alignés de sorte à permettre le passage de la vis 32 à travers ces deux anneaux.

On notera que dans une variante non représentée, on pourrait placer la plaque de connexion 34 après les extrémités de raccordement 11R, 12R, 13R.

Puis, on met en place de la vis de raccordement 32 dans la cavité de raccordement 24 de sorte que la vis de raccordement 32 passe au travers des anneaux des extrémités de raccordement 11R, 12R, 13R du premier, du deuxième et du troisième conducteur.

Ainsi, les trois conducteurs 11, 12, 13 se retrouvent électriquement connectés via la vis de raccordement 32 sans que l'on ait eu à déformer les conducteurs 11, 12, 13 pour les enfiler sur la vis de raccordement 32, puisque c'est la vis de raccordement 32 qui vient être insérée dans les anneaux des extrémités de raccordement 11R, 12, 13R.

Une fois la ou les vis de raccordement 32 disposées dans la cavité de raccordement 34, on met en place le joint de corps 46 autour du corps central 22.

On met ensuite en place le couvercle de protection 40 par-dessus la cavité de raccordement 24, le joint de corps 46 étant disposé entre le couvercle 40 et une surface extérieure du corps central 22.

On met également en place le premier joint de manchon 44, autour du premier conducteur 11, dans le premier manchon de réception 26, le deuxième joint de manchon 44, autour du deuxième conducteur 12, dans le deuxième manchon de réception 28 et le troisième joint de manchon 44 autour du troisième conducteur 13, dans le troisième manchon de réception 30.

On notera que la mise en place des joints de manchon 44 peut se faire dès que les extrémités de raccordement 11R, 12R, 13R sont insérées dans leurs manchons respectifs 26, 28, 30, c'est-à-dire sans distinction avant ou après la mise en place de la vis de raccordement 32. L'ordre dans lequel les joints de manchon 44 sont placés sur les conducteurs n'a pas non plus d'importance.

Une fois les joints de manchon 44 mis en place, on enfile les bagues de protection 48 sur les manchons de réception 26, 28, 30 de sorte à comprimer les joints de manchon 44.

De façon analogue, l'enfilement des bagues de protection 48 sur les manchons de réception 26, 28, 30 peut se faire dès les joints de manchon 44 mis en place, là encore sans distinction avant ou après la mise en place de la vis de raccordement 32.

Le procédé de raccordement selon l'invention à l'aide du kit de raccordement 18 selon le deuxième mode de réalisation est similaire, hormis le fait que l'on insère en premier l'extrémité de raccordement du troisième conducteur 13R dans le troisième manchon de réception 30. Par ailleurs, ainsi que représenté sur les figures 3 à 6, avant de mettre en place l'extrémité de raccordement du premier conducteur 11R dans le premier manchon de réception 26, on place, de façon optionnelle, l'entretoise 50 dans la cavité de raccordement 24. On met en place la deuxième extrémité de raccordement 12R dans le deuxième manchon de réception 28 en dernier. Toutefois, on notera que l'on peut également d'abord mettre en place l'extrémité de raccordement du deuxième conducteur 12R dans le deuxième manchon de réception 28, puis l'extrémité de raccordement du premier raccordement 11R dans le premier manchon de réception 26.

Par ailleurs, on s'assurera que les ouvertures des anneaux formant les extrémités de raccordement 11R, 12R, 13R soient sensiblement alignés de sorte à permettre le passage de la vis 32 à travers ces trois anneaux.

L'invention n'est pas limitée aux modes de réalisation présentés et d'autres modes de réalisation apparaîtront clairement à l'homme du métier.

Il est notamment possible de faire varier le nombre de manchons de connexion du boîtier, afin de s'adapter au nombre de conducteurs à connecter, de même que leur disposition, en fonction des contraintes liées à l'emplacement de l'ensemble de connexion.

En particulier, la présence du troisième manchon de réception est optionnelle lorsqu'il s'agit de ne raccorder que deux conducteurs électriques.

### Liste de références

- 10 :: Ensemble de connexion
- 11 :: Premier conducteur électrique
- 12 :: Deuxième conducteur électrique
- 13 :: Troisième conducteur électrique
- 11R :: Extrémité de raccordement du premier conducteur électrique
- 12R :: Extrémité de raccordement du deuxième conducteur électrique
- 13R :: Extrémité de raccordement du troisième conducteur électrique
- 14 :: Ame conductrice
- 16 :: Gaine isolante
- 18 :: Kit de connexion
- 20 :: Boîtier de connexion
- 22 :: Corps central du boîtier
- 24 :: Cavité de raccordement
- 24S :: Sous-cavités
- 25 :: Jupe
- 26 :: Premier manchon de réception
- 26L :: Extrémité libre du premier manchon
- 26R :: Extrémité du raccordement du premier manchon
- 28 :: Deuxième manchon de réception
- 28L :: Extrémité libre du deuxième manchon
- 28R :: Extrémité du raccordement du deuxième manchon
- 30 :: Troisième manchon de réception
- 32 :: Vis de raccordement
- 33 :: Paroi de séparation
- 34 :: Plaque de connexion
- 36 :: Orifices de connexion de la plaque de connexion
- 40 :: Couvercle de protection
- 42 :: Ergots d'encliquetage
- 44 :: Joints de manchon
- 46 :: Joint de corps
- 48 :: Bagues de protection
- 50 :: Entretoise
- 52 :: Ecrou

## Revendications

1. Kit de raccordement (18) électrique d'un premier conducteur (11) électrique à au moins un deuxième conducteur (12) électrique, **caractérisé en ce qu'il** comprend :
- un boîtier de connexion (20) comprenant un corps central (22) dans lequel est ménagée une cavité de raccordement (24) accessible par une ouverture, un premier manchon (26) de réception du premier conducteur (11) communiquant avec la cavité de raccordement (24), et au moins un deuxième manchon (28) de réception du deuxième conducteur (12) communiquant avec la cavité de raccordement (24) et le premier manchon de réception (26), et
- un élément de raccordement (32) destiné à être introduit dans la cavité de raccordement par l'ouverture apte à relier le premier conducteur (11) au deuxième conducteur (12),
l'ouverture étant délimitée par une jupe (25), le premier manchon (26) de réception, le deuxième manchon (28) de réception et la jupe (25) comprennent chacun une portion dont la section transversale possède un contour interne ayant une courbure à variation continue le long du contour.

2. Kit de raccordement (18) électrique selon la revendication 1, comprenant en outre un élément de fixation (34, 52) de l'élément de raccordement, l'élément de fixation (34, 52) étant destiné à être introduit dans la cavité de raccordement (24) par l'ouverture et étant muni d'un orifice de connexion (36) permettant d'accueillir l'élément de raccordement (32) une fois celui-ci introduit dans la cavité de raccordement (24).

3. Kit de raccordement (18) électrique selon la revendication 1 ou 2, dans lequel, le premier manchon (26) de réception et le deuxième manchon (28) de réception s'étendant selon un même axe longitudinal ou selon des axes longitudinaux parallèles.

4. Kit de raccordement (18) électrique selon l'une quelconque des revendications précédentes, dans lequel le boîtier de connexion (20) comprenant en outre un troisième manchon (30) de réception, communiquant avec la cavité de raccordement (24), le premier manchon (28), et le deuxième manchon (30) de réception.

5. Kit de raccordement (18) électrique selon les revendications 3 et 4 prises ensembles, dans lequel, le troisième manchon (30) de réception s'étendant selon un axe longitudinal, l'axe longitudinal du troisième manchon (30) de réception est parallèle à l'axe longitudinal du premier manchon de réception (26).

6. Kit de raccordement (18) électrique dans lequel l'élément de raccordement est une vis ou un rivet.

7. Kit de raccordement (18) électrique selon l'une quelconque des revendications précédentes, comprenant en outre un couvercle (40) de protection configuré pour recouvrir la cavité de raccordement (24).

8. Kit de raccordement (18) électrique selon l'une quelconque des revendications précédentes, comprenant en outre, pour chaque manchon de réception (26, 28, 30), un joint annulaire, dit joint de manchon (44), chaque joint de manchon (44) épousant les contours de son manchon de réception (26, 28, 30) et étant destiné à être inséré dans son manchon de réception (26, 28, 30).

9. Kit de raccordement électrique (18) selon l'une quelconque des revendications précédentes, comprenant en outre des bagues de protection (48) enfilées sur les manchons de réception (26, 28, 30) de sorte à comprimer les joints de manchon (44).

10. Kit de raccordement (18) selon l'une quelconque des revendications précédentes, comprenant en outre un joint d'étanchéité de corps, dit joint de corps (46), le joint de corps (46) étant un joint annulaire épousant les contours du corps central (22) et étant destiné à être inséré autour du corps central (22).

11. Kit de raccordement (18) électrique selon les revendications 7 et 10 prises ensemble, dans lequel le joint de corps (22) est disposé entre le couvercle (40) et une surface extérieure du corps central (22).

12. Kit de raccordement (18) électrique selon l'une quelconque des revendications précédentes, comprenant en outre une entretoise d'espacement (50) des conducteurs (12, 13) destinée à être disposé dans la cavité de raccordement (24), l'entretoise d'espacement (50) étant percée d'un orifice traversant et étant réalisée en matériau conducteur.

13. Ensemble de raccordement (10) électrique comprenant un premier conducteur (11) électrique muni d'une extrémité de raccordement (11R) en forme générale d'anneau, et au moins un deuxième conducteur (12) électrique muni d'une extrémité de raccordement (12R) en forme générale d'anneau,
**caractérisé en ce que** l'ensemble (10) comprend en outre un kit de raccordement (18) électrique selon l'une quelconque des revendications précédentes, l'extrémité de raccordement (11 R) du premier conducteur étant insérée dans le premier manchon de réception (26) et l'extrémité de raccordement (12R) du deuxième conducteur étant insérée dans le deuxième manchon de réception (28), les extrémités de raccordement (11R, 12R) étant traversées par l'élément de raccordement (32) inséré dans la cavité de connexion (24).

14. Procédé de raccordement électrique d'un premier conducteur (11) électrique à un second conducteur (12) électrique, les deux conducteurs (11, 12) comprenant une extrémité de raccordement (11R, 12R) en forme générale d'anneau, **caractérisé en ce qu'il** se fait à l'aide d'un kit de raccordement (18) électrique selon l'une quelconque des revendications précédentes et **en ce qu'**il comprend les étapes suivantes, dans cet ordre:
- insertion de l'extrémité de raccordement (11R) du premier conducteur dans le premier manchon de réception (26) de sorte qu'elle atteigne la cavité de raccordement (24) ;
- insertion de l'extrémité de raccordement (12R) du deuxième conducteur dans le deuxième manchon de réception (28) de sorte qu'elle atteigne la cavité de raccordement (24) ; et
- mise en place de l'élément de raccordement (32) dans la cavité de raccordement de sorte que l'élément de raccordement (32) passe au travers des anneaux des extrémités de raccordement (11R, 12R du premier et du deuxième conducteur.

15. Procédé de raccordement selon la revendication 14 **caractérisé en ce qu'il** se fait à l'aide d'un kit de raccordement (18) électrique selon la revendication 8 et **en ce qu'**il comprend les étapes suivantes :
- mise en place du premier joint de manchon (44), autour du premier conducteur (11), dans le premier manchon de réception (26),
- mise en place du deuxième joint de manchon (44), autour du deuxième conducteur (12), dans le deuxième manchon de réception (28).

16. Procédé de raccordement selon la revendication 15, **caractérisé en ce qu'il** se fait à l'aide d'un kit de raccordement (18) électrique selon la revendication 9 et **en ce qu'**il comprend en outre une étape d'enfilement des bagues de protection (48) sur les manchons de réception (26, 28, 30) de sorte à comprimer les joints de manchon (44).

17. Procédé de raccordement selon l'une des revendications 14 à 16 **caractérisé en ce qu'il** se fait à l'aide d'un kit de raccordement (18) électrique selon la revendication 10 et **en ce qu'**il comprend en outre une étape de mise en place du joint de corps (46) autour du corps central (22).

18. Procédé de raccordement selon la revendication 17, **caractérisé en ce qu'il** se fait à l'aide d'un kit de raccordement (18) électrique selon la revendication 10 et **en ce qu'**il comprend une étape de mise en place du couvercle de protection (40) par-dessus la cavité de raccordement (24), le joint de corps (46) étant disposé entre le couvercle (40) et une surface extérieure du corps central (22).
